(19) **Europäisches Patentamt**

**European Patent Office**

**Office européen des brevets**

(11) **EP 0 931 016 B1**

(12) **EUROPÄISCHE PATENTSCHRIFT**

(45) Veröffentlichungstag und Bekanntmachung des Hinweises auf die Patenterteilung:
**25.07.2001  Patentblatt 2001/30**

(21) Anmeldenummer: **97910241.5**

(22) Anmeldetag: **27.09.1997**

(51) Int Cl.$^7$: **C01B 33/26**, B01J 21/12

(86) Internationale Anmeldenummer:
**PCT/DE97/02250**

(87) Internationale Veröffentlichungsnummer:
**WO 98/15497 (16.04.1998 Gazette 1998/15)**

(54) **VERFAHREN ZUR HERSTELLUNG VON DISPERGIERBAREN ALUMOSILIKATEN**

METHOD FOR PRODUCING DISPERSIBLE ALUMINIUM SILICATES

MODE DE FABRICATION DE SILICATES D'ALUMINIUM DISPERSIBLES

(84) Benannte Vertragsstaaten:
**BE DE DK ES FR GB IT NL**

(30) Priorität: **05.10.1996  DE 19641141**

(43) Veröffentlichungstag der Anmeldung:
**28.07.1999  Patentblatt 1999/30**

(73) Patentinhaber: **SASOL Germany GmbH**
**22297 Hamburg (DE)**

(72) Erfinder:
• **BRASCH, Andrea**
  **D-25704 Meldorf (DE)**
• **DIBLITZ, Klaus**
  **D-22869 Hamburg (DE)**
• **MEYER, Arnold**
  **D-25693 St. Michaelisdonn (DE)**

(74) Vertreter: **Schupfner, Gerhard D., Dr. Dipl.-Chem.**
**Müller, Schupfner & Gauger,**
**Patentanwälte,**
**Postfach 1753**
**21236 Buchholz (DE)**

(56) Entgegenhaltungen:
EP-A- 0 583 783          EP-A- 0 669 162
WO-A-94/26791           FR-A- 2 243 020
FR-A- 2 527 196         FR-A- 2 639 256

## Beschreibung

Die Erfindung betrifft ein Verfahren zur Herstellung von in wäßrigen oder in wäßrig-sauren Medien dispergierbaren Alumosilikaten von hoher Reinheit durch Hydrolyse von Aluminiumverbindungen und Kieselsäureverbindungen und hydrothermaler Behandlung.

Alumosilikate kommen in großer Zahl in den unterschiedlichsten Modifikationen in der Natur vor. Darunter gibt es zahlreiche Verbindungen mit definierten kristallinen Strukturen wie z.B. Muskovit, Nephelin oder Chabasit. Ersetzt man in der Raumnetzstrukur von Silikaten die Siliciumatome teilweise durch Aluminiumatome unter Erhalt der Raumnetzstruktur nennt man solche Verbindungen Zeolithe.

Neben natürlichen Vorkommen existiert eine Reihe synthetisch hergestellter Alumosilikate. Diese können ebenfalls kristallchemisch definiert sein, es kann sich aber auch um physikalische Mischungen von Aluminiumhydroxid und Kieselsäuren in unterschiedlich wasserreicher Form handeln. Ebenfalls ist es möglich, daß neben dem Vorliegen von physikalischen Mischungen gleichzeitig auch kristallchemisch definiertes Alumosilikat vorliegt.

Ein übliches Herstellverfahren für solche Alumosilikate ist die Umsetzung von Tonen wie Kaolin mit Kieselsäure und Natriumhydroxid. Ein weiterer Syntheseweg ist die Cogelierung von Aluminiumhydroxidsolen mit Kieselsäuresolen und nachfolgender Ausfällung [GB 2166971-C]. Ebenfalls ist die Ausfällung eines Aluminiumsalzes in einem Kieselsäuresol bekannt [CA 848966-A].

Die oben beschriebenen Verfahren haben den Nachteil, daß die gewünschten Sole oder Dispersionen nur nach der Herstellung vorliegen, ein nachfolgend getrocknetes Pulver jedoch nur unzureichend oder unter Verwendung von Lösemittelgemischen in den dispergierten Zustand zu bringen ist. Nachteilig ist ebenfalls, daß die so erhaltenen Sole oder Dispersionen einen hohen Gehalt an Alkali- oder Erdalkalimetallen enthalten, da diese Metalle zur Stabilisierung der Kieselsäure eingesetzt werden. Die nachfolgende Reinigung durch z.B. Ionenaustausch gelingt nur unvollständig, so daß etwa typische Gehalte an Alkali- oder Erdalkalimetallen nach erfolgter Reinigung bei 0,1 % (= 1000 ppm) liegt (US 3933621). In der heterogenen Katalyse werden hochreine Katalysatorträger gefordert, deren Alkali- und/oder Erdalkalimetallgehalt unter 100 ppm liegt, vor allem sollte der Natriumoxidgehalt kleiner als 50 ppm sein. Zur Herstellung solch hochreiner Alumosilikate beschreibt das deutsche Patent DE 38 39 580-C1 einen Weg mittels ionenausgetauschter Orthokieselsäure. Die so hergestellten Alumosilikate besitzen die gewünschte hohe Reinheit, sie sind jedoch nicht dispergierbar.

Alumosilikate sind mit Aluminiumhydroxiden physikalisch/chemisch nicht vergleichbar. Sie besitzen z.B. eine stärkere Acidität der Oberfläche wegen des stärker Lewissauren Charakters der Kieselsäure. Diese Eigenschaft wird für eine Vielzahl von katalytischen Prozessen wie der Entschwefelung, Denitrifizierung, Oxidation, dem Hydrocracken und dem mildem Hydrocracken genutzt.

Moderne Katalysatoren bestehen oft aus einer Vielzahl unterschiedlicher Trägermaterialien (siehe z.B. GB 2166971-C). Es liegt auf der Hand, daß eine möglichst homogene Durchmischung solcher Trägermaterialien bei der Herstellung angestrebt wird, um einheitliche Kompositionen dieser Katalysatorträger zu gewährleisten. Aus diesem Grund ist ein dispergierbares Alumosilikat vorteilhaft. Diese Eigenschaft ist ebenfalls vorteilhaft für die Aufbringung einer Schicht eines solchen dispergierbaren Alumosilikates auf Substraten. Diese Technik kann im Bereich der Katalyse ebenso wie in der Beschichtung von Werkstoffen angewandt werden. Aus den obengenannten Ausführungen ergibt sich der Bedarf nach hochreinen dispergierbaren Alumosilikaten.

Der Erfindung lag die Aufgabe zugrunde, eine Synthese von dispergierbaren Alumosilikaten zu entwickeln, welche die nachfolgenden Vorteile besitzt:

- Die erfindungsgemäß hergestellten Alumosilikate sollen auch nach Trocknung und Konfektionierung in Pulverform in wäßrigen Lösungen ohne Zusatz oder Behandlung mit organischen Lösungsmitteln dispergierbar sein.
- Die erfindungsgemäß hergestellten Alumosilikate sollen eine hohe Reinheit besitzen.
- Die zur Herstellung dieser Verbindungen eingesetzten Ausgangsstoffe sollen leicht verfügbar sein.
- Der Preis der Ausgangsstoffe soll ein wirtschaftliches Verfahren ermöglichen.
- Der Herstellungsprozeß soll kontinuierlich und diskontinuierlich möglich sein.

Überraschenderweise wurde nun gefunden, daß durch das nachstehend beschriebene Verfahren Alumosilikate zugänglich sind, die die der Erfindung zugrundeliegenden Aufgaben lösen.

Die vorliegende Erfindung besteht in einem Verfahren zur kontinuierlichen oder diskontinuierlichen Herstellung von in wäßrigen und/oder wäßrig-sauren Medien dispergierbaren Alumosilikaten mit hoher Reinheit. Zum Erreichen der gewünschten Eigenschaften wird folgendes Verfahren angewandt:

Verfahren zur Herstellung von in wäßrigen und/oder wäßrig-sauren Medien dispergierbaren Alumosilikaten, indem man

(A) gemeinsam oder zeitlich bzw. räumlich von einander getrennt, bevorzugt gemeinsam, eine oder mehrere hydrolysierbare Aluminiumverbindung(en) hydrolysiert

(B) und diese vor, während oder nach der Hydrolyse, bevorzugt vor oder während der Hydrolyse, in Kontakt mit einer oder mehreren Kieselsäureverbindung(en) bringt und

(C) die Umsetzungsprodukte gemeinsam nach der Hydrolyse oder auch schon während der Hydrolyse einer hydrothermalen Alterung in wäßrigem Medium in Gegenwart einer einwertigen organischen C1- bis C6- Säure oder einer einwertigen anorganischen Säure bei Temperaturen von 40 bis 220 °C über einen Zeitraum von größer 0,5 h unterzieht, sowie

(D) ggf. anschließend calciniert,

wobei das Verhältnis der eingesetzten Aluminiumverbindungen zu den Siliciumverbindungen 99,5 Gew% zu 0,5 Gew% bis 70 Gew% zu 30 Gew%, jeweils bezogen auf $Al_2O_3$ und $SiO_2$, beträgt.

Die Hydrolyse kann bei 20 bis 98°C, vorzugsweise bei 50 bis 98°C, besonders bevorzugt bei 85 bis 98°C durchgeführt werden. Die hydrolysierbaren Aluminiumverbindungen im Sinne dieser Erfindung sind alle Aluminiumverbindungen, die bei Umsetzung mit Wasser Al-OH und/oder Al-O-Al Stukturen ausbilden. Exemplarisch seien für die Aluminiumverbindungen Aluminiumalkoholate, Aluminiumhydroxyalkoholate, Aluminiumoxyalkoholate, Aluminiumacetylacetonate, Aluminiumalkylchloride oder Aluminiumcarboxylate genannt.

Die hydrolysierbare Aluminiumverbindungen sind bevorzugt aber Verbindung des Typs $Al(O-R-A-R')_{3-n}$ (O-R")$_n$, wobei unabhängig voneinander und ggf. für jeden Rest unterschiedlich

R"    ein verzweigter oder unverzweigter, cyclischer oder acyclischer oder aromatischer Kohlenwasserstoffrest mit 1 bis 30, insbesondere 2 bis 12 Kohlenstoffatomen ist,

R'    ein verzweigter oder unverzweigter, cyclischer oder acyclischer oder aromatischer Kohlenwasserstoffrest mit 1 bis 10 Kohlenstoffatomen ist, insbesondere ein Alkylrest mit 4 - 8 Kohlenstoffatomen,

R    ein zweiwertiger und verzweigter oder unverzweigter, cyclischer oder acyclischer oder aromatischer $C1^2$- bis C10- Kohlenwasserstoffrest ist, insbesondere ein Alkylrest mit 1 - 5 Kohlenstoffatomen, insbesondere bevorzugt mit 1 bis 3 Kohlenstoffatomen., wobei dieser besonders bevorzugt unverzweigt und acyclisch ist,

A    für ein Heteroatom aus der Hauptgruppe 6 (Sauerstoff-Gruppe) oder Hauptgruppe 5 (Stickstoff-Gruppe) des Periodensystems, bevorzugt für Sauerstoff oder Stickstoff selbst steht, wobei wenn A für ein Element der Hauptgruppe 5 steht trägt A zur Absättigung seiner Valenzen als weitere Substituenten Wasserstoff, oder einen C1- bis C10- Alkyl- oder einen C6- bis C10- Aryl/Alkylarylrest und

n    ein Index für die Zahlen 0, 1, 2 oder 3 ist.

Bevorzugt ist n gleich 0 oder n gleich 3. Für n gleich 0 und A gleich Sauerstoff sind Aluminiumtrisbutylenglykolate bevorzugt

Für n gleich 3 sind die Aluminiumalkoxyverbindungen Aluminiumtrisalkoholate. Diese tragen mit steigender Präferenz C2- bis C12-, C4- bis C8-, oder C6- bis C8- Kohlenwasserstoffreste, wobei die Reste gesättigt oder ungesättigt, cyclisch oder acyclisch, verzweigt oder unverzweigt oder aromatisch, bevorzugt aber gesättigt sind. Besonders bevorzugt sind lineare gesättige C6- bis C8- Kohlenwasserstoffreste. Hydrolysierbare Aluminiumalkoholate können z. B. nach dem Verfahren der EP-0 111 115-A1 hergestellt werden.

Die hydrolysierbaren Metallverbindungen können zuvor durch Destillation, Filtration oder Zentrifügation gereinigt werden. Für die Kieselsäure ist ein Ionenaustausch, bevorzugt an Ammoniumionen enthaltenden Austauschharzen, von Metallionen, insbesondere Natrium, eine wirkungsvolle Reinigungsprozedur.

Während oder nach der Hydrolyse muß für die hydrothermale Behandlung eine Säure anwesend sein. Diese Säure ist eine einwertige organische C1- bis C6- Säure oder eine einwertige anorganische Säure (bzw. eine einwertige Mineralsäure) wie HCl oder $HNO_3$. Die Säure kann auch nach der Hydrolyse zugegeben werden, solange sie während der hydrothermalen Behandlung zugegen ist. Der Zusatz der Säure bzw. eines Säurebildners erfolgt nach dem erfindungsgemäßen Verfahren vor der ersten Trocknung des Alumosilikates.

Einwertige organische C1- bis C6- Säuren im Sinne der Erfindung sind organische Verbindungen, die zumindest 1 bis 6 Kohlenstoffatome enthalten und in Gegenwart von Wasser sauer, d.h. als Protonenspender, reagieren und bezogen auf das Säuremolekül lediglich ein Proton freigeben können.. Eingeschlossen in diese Definition sind zum Beispiel Säurechloride, Sulfonsäuren und andere organische Verbindungen, die in Wasser-COOH bzw. -COO⁻ Gruppen ausbilden.

Die Menge an zugesetzter Säure beträgt 0,1 bis 2,0 g, bezogen auf ein 1 g eingesetzten Feststoff, bevorzugt sind 0,2 bis 0,8 g Säure. Die hydrothermale Alterung wird bevorzugt über einen Zeitraum von 1 h bis 22 h durchgeführt. Als besonders geeignet hat sich eine Dauer von 2 h bis 18 h und eine Temperatur von 80 - 130 °C erwiesen.

Das erfindungsgemäße Verfahren zeichnet sich weiterhin dadurch aus, daß abgesehen von den Edukten bzw. Produkten frei von organischen Lösungsmitteln und im wesentlichen in alkoholisch / wäßriger oder vorzugsweise wäßriger Umgebung umgesetzt werden kann.

Die Edukte werden in einem Verhältnis von 99,5 Gew% zu 0,5 Gew% bis 70 Gew% zu 30 Gew%, vorzugsweise von 98 Gew% zu 2 Gew% bis 70 Gew% zu 30 Gew%, jeweils bezogen auf $Al_2O_3$ zu $SiO_2$, eingesetzt. Das erfindungsgemäße Produkt der Umsetzung kann weiterhin bei Temperaturen zwischen 550 °C und 1500 °C für 0,5 bis 24 h kalziniert werden.

Die dispergierbaren Alumosilikate können als Katalysator, als Katalysatorträger für katalytische Prozesse und zur Herstellung derselben, als Ausgangsmaterial für keramische Werkstoffe, als Beschichtungsmaterial, als Binderkomponente und als Rheologiemodifikatoren in wässrigen Systemen verwendet werden.

Die erfindungsgemäß einzusetzenden Kieselsäureverbindungen sind z.B. Kondensationsprodukte der Orthokieselsäure, insbesondere niedrige Kondensationsprodukte und besonders bevorzugt Orthokieselsäure selbst. Die erfindungsgemäß einzusetzenden Kieselsäureverbindungen lassen sich auch in situ durch Hydrolyse von Siliciumtetrachlorid herstellen. Für die Hydrolyse findet bevorzugt Wasser Anwendung.

Unter dem Begriff "dispergierbare Alumosilikate" im Sinne der Erfindung versteht man solche Alumosilikate welche sich ausgehend von der trockenen, zweckmäßigerweise pulverförmigen Form zumindest zu größer 90 Gew. %, besser zu größer 95 Gew.%, in wäßrigen Medien dispergieren lassen. Das heißt zu größer 90 Gew.%, besser zu größer 95 Gew.% nach dem Dispergieren im dispergierten Zustand verbleiben. Zum Quantifizieren der Dispergierbarkeit wird auf die im experimentellen Teil beschriebene Methode verwiesen. Zur Trocknung der so erhaltenen wäßrigen Produkte können die üblichen Verfahren wie Sprühtrocknung oder Trommeltrocknung angewandt werden. Das Verfahren zur Herstellung der erfindungsgemäßen Alumosilikate läßt sich kontinuierlich und diskontinuierlich ausgestalten.

Zur Dispergierung der erfindungsgemäßen Alumosilikate können in Wasser verdünnte Säuren verwandt werden. Diese können anorganische einwertige Säuren wie Salzsäure, oder Salpetersäure oder C1- bis C6-organische Säuren sein, bevorzugt sind einwertige Säuren. Die Konzentration der zum Dispergieren zu verwendenden Säure kann von 0,1 %-. bis 40 Gew.% (bezogen auf die reine Säure) reichen. Bevorzugt sind aber geringere Mengen etwa 0,1 bis 5 Gew.%. In einigen Fällen kann zur Dispergierung lediglich Wasser verwandt werden.

Die erfindungsgemäß hergestellten Verbindungen lassen sich Kalzinieren. Zum Kalzinieren werden die erfindungsgemäßen Verbindungen in einen Ofen bei Temperaturen zwischen vorzugsweise 550 °C und 1500 °C über einen Zeitraum von vorzugsweise 3 h bis 24 h gehalten. Das so hergestellte Metalloxid weist ebenfalls die geforderte hohe Reinheit auf.

Die folgende Tabelle 1 zeigt erfindungsgemäß hergestellte Alumosilikate, sowie deren Dispergierbarkeit D.

Tabelle 1

| Verbindung | $Al_2O_3$ : $SiO_2$ [Gew.%: Gew%] | $HNO_3$ [*] [Gew%] | Alterung [h bei °C] | Dispergierbarkeit D [%] |
|---|---|---|---|---|
| 1 | 95,0 : 5,0 | 0,5 | 16h / 95 °C | 98 |
| 2 | 90,5 : 9,5 | 0,8 | 16h / 95 °C | 95 |
| 3 | 94,9 : 5,1 | 0,6 | 5h / 95 °C | 97 |
| 4 | 90,7 : 9,3 | 1,0 | 5h / 95 °C | 96 |
| 5 | 70,5 : 29,5 | - | 5h / 95 °C | 99 |
| A | 95,1 : 4,9 | 30 | - | nicht dispergierbar |
| B | 50,4 : 49,6 | 30 | - | nicht dispergierbar |
| C | 68,8 : 31,2 | 30 | 5 h / 95 °C | nicht dispergierbar |
| *Legende: Verbindung A und B sind konventionell hergestellte Alumosilikate, C ist ein erfindungsgemäß mit hydrothermaler Behandlung jedoch ohne Säurezusatz hergestelltes Alumosilikat, A bis C sind Vergleichsubstanzen, es sind jeweils 10 Gew% Feststoff Alumosilikat dispergiert worden,* | | | | |

[*] *Dispergiersäure.*

Tabelle 2 gibt die physikalischen Daten der erfindungsgemäßen Alumosilikate im Vergleich zu zwei Standard-Alumosilikaten A und B wieder. Die als Vergleichssubstanzen dienenden Alumosilikate A und B sind durch Vermischen einer Tonerdedispersion mit Kieselsäure hergestellt.

Tabelle 2

| Verbindung | $Al_2O_3$ : $SiO_2$ [Gew.%] | Oberfläche [$m^2$/g] | Porenvolumen [ml/g] |
|---|---|---|---|
| 1 | 95,0 : 5,0 | 368 | 0,50 |
| 2 | 90,5 : 9,5 | 409 | 0,50 |
| 3 | 94,9 : 5,1 | 350 | 0,49 |

Tabelle 2 (fortgesetzt)

| Verbindung | $Al_2O_3 : SiO_2$ [Gew.%] | Oberfläche [$m^2$/g] | Porenvolumen [ml/g] |
|---|---|---|---|
| 4 | 90,7 : 9,3 | 364 | 0,48 |
| 5 | 70,5 : 29,5 | 246 | 0,11 |
| A | 95,1 : 4,9 | 314 | 0,54 |
| B | 50,4 : 49,6 | 452 | 0,60 |

Die erfindungsgemäß hergestellten dispergierbaren Alumosilikate besitzen eine hohe Reinheit. Insbesondere sind die für die Anwendung in der Katalyse besonders nachteiligen Alkali- und Erdalkimetallgehalte sehr gering. In Tabelle 3 sind die Ergebnisse der Spurenelementbestimmung mittels ICP dargelegt. Eine weitere Erhöhung der Reinheit gegenüber den Werten aus Tabelle 3 kann durch Verwendung von bidestilliertem Wasser und Gefäßen aus inertem Material erzielt werden.

Tabelle 3

| Verbindung | $Na_2O$ [PPM] | $Li_2O$ [PPM] | MgO [PPM] | CaO [PPM] | $TiO_2$ [PPM] | $Fe_2O_3$ [PPM] |
|---|---|---|---|---|---|---|
| 1 | <10 | <5 | <10 | <10 | <50 | 50 |
| 2 | <10 | <5 | <10 | <10 | <50 | 34 |
| 3 | 15 | <5 | <10 | <10 | <50 | 28 |

*Legende: Die Summe anderer Elemente wie Pb, Zn, Ni, Cr, Cu, Mn, Mo und Ga beträgt kleiner 50 PPM*

**Beispiele** (allgemein)

Zur Analyse der erfindungsgemäß hergestellten Verbindungen wurden die Verunreinigungen durch Spurenelemente mittels induktiv gekoppelter Plasmaspektroskopie bestimmt. Oberflächen wurden mittels BET (3-Punkt Methode) ermittelt, Porenvolumina zusätzlich mittels Quecksilberporosimetrie (Porosimeter Autopore II 9220, Mikromeritics), sowie mittels Stickstoffporosimetrie (Flow Prep 060, Gemini 2360, 2375 Mikromeritics). Zum Kalzinieren wurden die erfindungsgemäßen Verbindungen in einem Muffelofen Temperaturen zwischen 550 °C und 1500 °C ausgesetzt. Zur Hydrolyse wurde deionisiertes Wasser verwendet.

Zur Bestimmung der Dispergierbarkeit D wurde folgende Methode angewandt. Eine Menge des trockenen Feststoffes wird mit einer verdünnten Säure, etwa Salpetersäure, in einem Becherglas aufgerührt. Danach wird mit einem Rührer 10 Min. gerührt (800-850 upm) und die Aufschlämmung quantitativ in Zentrifugengläser überführt. Man zentrifugiert 20 Min. bei 2400 Umin$^{-1}$ und gießt dann die überstehende Lösung ab und trocknet den verbleibenden Rückstand im Zentrifugenglas mindestens 0,5 Std. bei 573 K (300°C). Das Zentrifügenglas wird mit und anschließend ohne Rückstand gewogen. Aus der Differenz erhält man die Auswaage des nichtdispergierten Feststoffes.

nicht dispergierbarer Anteil in % = (g Rückstand x 100 / Einwaage Tonerde g)

dispergierter Anteil D in % = 100 - nicht dispergierter Anteil in %

Beispiel 1 (Verbindung 1):

In einem 2000 ml Dreihalskolben wurden 487 g Wasser und 87,7 g wäßrige Kieselsäure (3,6 Gew.%) vorgelegt und auf 75°C erhitzt. Es wurden insgesamt 500 g Aluminiumtrishexanolat (Al-Gehalt = 6,35 Gew.%) in drei Schritten mit je 15 min Zeitunterschied zu der Mischung zugegeben und 30 min. gerührt. Danach erfolgte die Zugabe von 6,3 g einer 65 %igen Salpetersäure. Man dekantierte den Alkohol ab und verdünnte auf etwa 5% Feststoff. Man erhitzte auf 95°C und hielt die Temperatur über 16 h. Die verbleibende wäßrige Phase wurde durch Wasserdampfdestillation von Alkoholresten befreit. Die Trocknung erfolgte durch Sprühtrocknung.

Beispiel 2 (Verbindung 2):

In einem 2000 ml Dreihalskolben wurden 390 g Wasser und 185 g wäßrige Kieselsäure (3,6 Gew.%) vorgelegt und auf 75°C erhitzt. Es wurden insgesamt 500 g Aluminiumtrishexanolat (Al-Gehalt = 6,35 Gew.%) in drei Schritten mit je 15 min. Zeitunterschied zu der Mischung zugegeben und 30 min. gerührt. Danach erfolgte die Zugabe von 6,7 g einer 65 %igen Salpetersäure. Man dekantierte den Alkohol und verdünnte auf etwa 5% Feststoff. Man erhitzte auf 95°C und hielt die Temperatur über 16 h. Die verbleibende wäßrige Phase wurde durch Wasserdampfdestillation von Alkoholresten befreit. Die Trocknung erfolgte durch Sprühtrocknung.

Beispiel 3 (Verbindung 3):

In einem 2000 ml Dreihalskolben wurden 490 g Wasser und 78,3 g wäßrige Kieselsäure (4,0 Gew.%) vorgelegt und auf 75 °C erhitzt. Es werden insgesamt 500 g Aluminiumtrishexanolat (Al-Gehalt = 6,3 Gew.%) in drei Schritten mit je 15 min. Zeitunterschied zu der Mischung zugegeben und 30 min. gerührt. Dänach erfolgte die Zugabe von 6,3 g einer 65%igen Salpetersäure. Man dekantierte den Alkohol und verdünnte auf etwa 5% Feststoff. Man erhitzte auf 95°C und hielt die Temperatur über 5 h. Die verbleibende wäßrige Phase wurde durch Wasserdampfdestillation von Alkoholresten befreit. Die Trocknung erfolgte durch Sprühtrocknung.

Beispiel 4 (Verbindung 4):

In einem 2000 ml Dreihalskolben wurden 383 g Wasser und 185 g wäßrige Kieselsäure (3,6 Gew.%.) vorgelegt und auf 75 °C erhitzt. Es wurden insgesamt 500 g Aluminiumtrishexanolat (Al-Gehalt = 6,35 Gew.%) in drei Schritten mit je 15 min. Zeitunterschied zu der Mischung zugegeben und 30 min. gerührt. Danach erfolgte die Zugabe von 6,7 g einer 65 %igen Salpetersäure. Man dekantierte den Alkohol und verdünnte auf etwa 5% Feststoff. Man erhitzte auf 95°C und hielt die Temperatur über 5 h. Die verbleibende wäßrige Phase wurde durch Wasserdampfdestillation von Alkoholresten befreit. Die Trocknung erfolgte durch Sprühtrocknung.

Beispiel 5 (Verbindung 5):

In einem 2000 ml Dreihalskolben wurden 654 g wäßrige Kieselsäure (3,9 Gew.%) und 67 g Salpetersäure (65 Gew.%) vorgelegt und auf 75 °C erhitzt. Man gab insgesamt 500 g Aluminiumtrishexanolat (Al-Gehalt = 6,3 Gew.%) in drei Schritten mit je 15 min. Zeitunterschied zu der Mischung und ließ 30 min. rühren. Man erhitzte auf 95°C und hielt die Temperatur über 5 h, wobei auf etwa 5% Feststoff verdünnt wurde. Der überstehende Alkohol wurde abdekantiert, die verbleibende wäßrige Phase durch Wasserdampfdestillation von Alkoholresten befreit. Die Trocknung erfolgte durch Sprühtrocknung.

Beispiel 6 (Verbindung C):

In einem 2000 ml Dreihalskolben wurden 638 g wäßrige Kieselsäure vorgelegt und auf 75°C erhitzt. Man gab insgesamt 500 g Aluminiumtrishexanolat (Al-Gehalt = 6,35 wt.%) in drei Schritten mit je 15 min. Zeitunterschied zu der Mischung und ließ 30 min. rühren. Man dekantierte den Alkohol und verdünnte auf etwa 5% Feststoff. Man erhitzte auf 95°C und hielt die Temperatur über 5 h. Die verbleibende wäßrige Phase wurde durch Wasserdamfdestillation von Alkoholresten befreit. Die Trocknung erfolgte durch Sprühtrocknung.

**Patentansprüche**

**1.**    Verfahren zur Herstellung von in wäßrigen und/oder in wäßrig-sauren Medien dispergierbaren Alumosilikaten, **dadurch gekennzeichnet**, daß man

(A) gemeinsam oder zeitlich bzw. räumlich voneinander getrennt, bevorzugt gemeinsam, eine oder mehrere hydrolysierbare Aluminiumverbindung(en) hydrolysiert
(B) und diese vor, während oder nach der Hydrolyse in Kontakt mit einer oder mehreren Kieselsäureverbindung (en) bringt und
(C) die Umsetzungsprodukte gemeinsam nach der Hydrolyse oder auch schon während der Hydrolyse einer hydrothermalen Alterung in wäßrigem Medium in Gegenwart einer einwertigen organischen C1- bis C6- Säure oder einer einwertigen anorganischen Säure bei Temperaturen von 40 bis 220 °C über einen Zeitraum von größer 0,5 h unterzieht, sowie
(D) ggf. anschließend kalziniert,

wobei das Verhältnis der eingesetzten Aluminiumverbindungen zu den Siliciumverbindungen 99,5 Gew% zu 0,5 Gew% bis 70 Gew% zu 30 Gew%, jeweils bezogen auf $Al_2O_3$ und $SiO_2$, beträgt.

2. Verfahren nach Anspruch 1, **dadurch gekennzeichnet,** daß man als hydrolysierbare Aluminiumverbindungen Verbindungen des Typs Al(O-R-A-R')$_{3-n}$ (O-R")$_n$ einsetzt, wobei

R" ein Kohlenwasserstoffrest mit 1 bis 30 Kohlenstoffatomen ist,

R' ein Kohlenwasserstoffrest mit 1 bis 10 Kohlenstoffatomen ist,

R ein zweiwertiger Kohlenwasserstoffrest mit 1 bis 10 Kohlenstoffatomen ist und A für ein Heteroatom aus der Hauptgruppe 6 (Sauerstoff-Gruppe) oder Hauptgruppe 5 (Stickstoff-Gruppe) des Periodensystems, bevorzugt für Sauerstoff oder Stickstoff selbst steht, wobei wenn A für ein Element der Hauptgruppe 5 steht A zur Absättigung seiner Valenzen als weitere Substituenten Wasserstoff, oder einen C1- bis C10- Alkyl- oder einen C6- bis C10- Aryl-/Alkylarylrest trägt, und

n ein Index für die Zahlen 0, 1, 2 oder 3 ist.

3. Verfahren nach Anspruch 2, **dadurch gekennzeichnet,** daß n gleich 0 ist.

4. Verfahren nach Anspruch 2, **dadurch gekennzeichnet,** daß n gleich 3 ist.

5. Verfahren nach einem der Anspruche 1, 2 oder 4, **dadurch gekennzeichnet,** daß man als hydrolysierbare Aluminiumverbindungen Aluminiumalkoholate mit C2- bis C12-, bevorzugt C4- bis C8-, besonders bevorzugt gesättigten C6- bis C8-, Kohlenwasserstoffresten einsetzt.

6. Verfahren nach einem der vorhergehenden Ansprüche, **dadurch gekennzeichnet,** daß als Kieselsäureverbindung Orthokieselsäure und/oder Kondensationsprodukte der Orthokieselsäure eingesetzt werden.

7. Verfahren nach einem der vorhergehenden Ansprüche, **dadurch gekennzeichnet**, daß die hydrolysierbaren Metallverbindungen zuvor durch Destillation, Filtration oder Zentrifugation gereinigt wurden und/oder durch Ionenaustausch die Kieselsäure, bevorzugt an Ammoniumionen enthaltenden Austauschharzen, von Metallionen befreit wird.

8. Verfahren nach einem der vorhergehenden Ansprüche, **dadurch gekennzeichnet**, daß man bei 20 bis 98°C, vorzugsweise bei 85 bis 98°C hydrolisiert.

9. Verfahren nach einem der vorhergehenden Ansprüche, **dadurch gekennzeichnet**, daß die Säure vor, während oder erst nach der Hydrolyse und vor der hydrothermalen Behandlung zugegeben wird.

10. Verfahren nach einem der Ansprüche 1 bis 8 **dadurch gekennzeichnet,** daß die Säure nach der Hydrolyse und vor oder während der hydrothermalen Behandlung zugegeben wird.

11. Verfahren nach einem der vorhergehenden Ansprüche, **dadurch gekennzeichnet**, daß die hydrothermale Alterung über einen Zeitraum von 0,5 h bis 24 h, bevorzugt 2 h bis 18 h, durchgeführt wird.

12. Verfahren nach einem der vorhergehenden Ansprüche , **dadurch gekennzeichnet**, daß die hydrothermale Alterung bei 80 bis 130 °C durchgeführt wird.

13. Verfahren nach einem der vorhergehenden Ansprüche, **dadurch gekennzeichnet**, daß das Produkt der Umsetzung bei Temperaturen zwischen 550 °C und 1500 °C für 0,5 h bis 24 h kalziniert wird.

14. Alumosilikate dispergiert in wäßrigen oder wäßrig/alkoholischen Medien, **dadurch gekennzeichnet,** daß die Alumosilikate nach einem Verfahren der Ansprüche 1 bis 13 herstellbar sind und sodann im getrockneten, im wesentlichen wasserfreien Zustand in dem wäßrigen oder wäßrig/alkoholischen Medium dispergierbar sind.

15. Verwendung der Alumosilikate nach Anspruch 14, als Katalysatoren, als Katalysatorträger, zur Herstellung von Katalysatoren, als Ausgangsmaterial für keramische Werkstoffe, Beschichtungsmaterial, als Binderkomponente und/oder als Rheologiemodifikatoren in wäßrigen Systemen.

**Claims**

1. A process for the manufacture of alumino-silicates which are dispersible in aqueous and/or aqueous-acidic media, characterised in that

(A) one or more hydrolyzable aluminium compound(s) is (are) hydrolyzed jointly or separately from each other in space or time, preferably jointly, and

(B) prior to, during, or after hydrolysis, said compound(s) is (are) contacted with one or more silicic acid compound(s), and

(C) after hydrolysis or also already during hydrolysis, the reaction products are jointly subjected to hydrothermal ageing in aqueous medium and in the presence of a monovalent organic $C_1$- to $C_6$- acid or a monovalent inorganic acid at temperatures of 40 to 220 °C for a period of more than 0.5 hour, and,

(D) optionally, the aforesaid products are calcined,

whereby the aluminium compound / silicon compound ratio used is from 99.5 wt.% : 0.5 wt.% to 70 wt.% : 30 wt. %, each referring to the ratio of $Al_2O_3 : SiO_2$.

2. A process according to claim 1, characterised in that the hydrolyzable aluminium compounds are compounds of the type $Al(O\text{-}R\text{-}A\text{-}R')_{3-n} (O\text{-}R'')_n$, wherein

R" is a hydrocarbon residue having 1 to 30 carbon atoms,

R' is a hydrocarbon residue having 1 to 10 carbon atoms,

R is a bivalent hydrocarbon residue having 1 to 10 carbon atoms, and

A represents a heteroatom of the main group 6 (oxygen group) or the main group 5 (nitrogen group) of the periodic system, preferably oxygen or nitrogen, wherein, if A represents an element of the main group 5, A bears hydrogen or a $C_1$ to $C_{10}$ alkyl residue or a $C_6$ to $C_{10}$ aryl- / alkyl aryl residue as additional substituent (s) for the saturation of its valences, and

n is an index for the numbers 0, 1, 2, or 3.

3. A process according to claim 2, characterised in that n is equal to 0.

4. A process according to claim 2, characterised in that n is equal to 3.

5. A process according to any one of claims 1, 2, or 4, characterised in that the hydrolyzable aluminium compounds are aluminium alcoholates having $C_2$ to $C_{12}$, preferably $C_4$ to $C_8$, most preferably saturated $C_6$ to $C_8$ hydrocarbon residues.

6. A process according to any one of the preceding claims, characterised in that orthosilicic acid and/or condensation products thereof are used as the silicic acid compound.

7. A process according to any one of the preceding claims, characterised in that the hydrolyzable metal compounds are first purified by distillation, filtration, or centrifugation, and/or the silicic acid is liberated from metal ions by ion exchange, preferably on exchanger resins containing ammonium ions.

8. A process according to any one of the preceding claims, characterised in that the hydrolysis is performed at 20 to 98 °C, preferably 85 to 98 °C.

9. A process according to any one of the preceding claims, characterised in that the acid is added prior to, during, or after the hydrolysis and prior to the hydrothermal treatment.

10. A process according to any one of claims 1 to 8, characterised in that the acid is added after the hydrolysis and prior to or during the hydrothermal treatment.

11. A process according to any one of the preceding claims, characterised in that the hydrothermal ageing is conducted for a period of 0.5 hour to 24 hours, preferably 2 to 18 hours.

12. A process according to any one of the preceding claims, characterised in that the hydrothermal ageing is conducted at 80 to 130 °C.

13. A process according to any one of the preceding claims, characterised in that the reaction product is calcined at temperatures of between 550 °C and 1500 °C for a period of 0.5 hour to 24 hours.

14. Alumino-silicates dispersed in aqueous or aqueous/alcoholic media, characterised in that the alumino-silicates are manufactured according to any one of the processes defined in claims 1 to 13 , and thereafter - being in a dried, essentially anhydrous state - are dispersable in the aqueous or aqueous/alcoholic medium.

15. The use of the alumino-silicates according to claim 14 as catalysts, catalyst supports, for the manufacture of catalysts, as starting materials for ceramics, as coating materials, and as binder components and/or rheological modifiers in aqueous systems.

**Revendications**

1. Procédé pour la préparation de silicates d'aluminium dispersibles dans des milieux aqueux et/ou acido-aqueux, caractérisé

   (A) en ce qu'on hydrolyse ensemble ou de manière séparée l'un de l'autre dans le temps ou, selon le cas, dans l'espace, de préférence ensemble, un ou plusieurs composés d'aluminium hydrolysables
   (B) et on met ceux-ci en contact, avant, pendant ou après l'hydrolyse avec un ou plusieurs composés d'acide silicique et
   (C) on soumet les produits de transformation, ensemble, après l'hydrolyse ou même déjà pendant l'hydrolyse, à un vieillissement hydrothermique en milieu aqueux en présence d'un acide organique monovalent en $C_1$ à $C_6$ ou d'un acide inorganique monovalent à des températures de 40 à 220°C pendant un laps de temps supérieur à 0,5 h, et
   (D) on calcine le cas échéant,
   le rapport des composés d'aluminium utilisés aux composés de silicium étant de 99,5% en poids à 0,5% en poids jusqu'à 70% en poids à 30% en poids, à chaque fois par rapport à $Al_2O_3$ et à $SiO_2$.

2. Procédé selon la revendication 1, caractérisé en ce qu'on utilise comme composés d'aluminium hydrolysables des composés du type $Al(O-R-A-R')_{3-n}(O-R'')_n$, où

   R'' représente un radical hydrocarboné comprenant 1 à 30 atomes de carbone,
   R' représente un radical hydrocarboné comprenant 1 à 10 atomes de carbone,
   R représente un radical hydrocarboné divalent comprenant 1 à 10 atomes de carbone et
   A représente un hétéroatome du groupe principal 6 (groupe de l'oxygène) ou du groupe principal 5 (groupe de l'azote) du système périodique, de préférence l'oxygène ou l'azote même, A, lorsqu'il représente un élément du groupe principal 5, portant pour saturer ses valences, comme autres substituants un hydrogène ou un radical alkyle en $C_1$ à $C_{10}$ ou un radical aryle en $C_6$ à $C_{10}$ ou un radical alkylaryle en $C_6$ à $C_{10}$ et
   n représente un indice pour les nombres 0, 1, 2 ou 3.

3. Procédé selon la revendication 2, caractérisé en ce que n est égal à 0.

4. Procédé selon la revendication 2, caractérisé en ce que n est égal à 3.

5. Procédé selon l'une quelconque des revendications 1, 2 ou 4, caractérisé en ce qu'on utilise comme composés d'aluminium hydrolysables des alcoolates d'aluminium comprenant des radicaux hydrocarbonés en $C_2$ à $C_{12}$, de préférence en $C_4$ à $C_8$, de manière particulièrement préférée des radicaux hydrocarbonés saturés en $C_6$ à $C_8$.

6. Procédé selon l'une quelconque des revendications précédentes, caractérisé en ce qu'on utilise comme composé d'acide silicique de l'acide orthosilicique et/ou des produits de condensation de l'acide orthosilicique.

7. Procédé selon l'une quelconque des revendications précédentes, caractérisé en ce que les composés métalliques hydrolysables sont purifiés au préalable par distillation, filtration ou centrifugation et/ou que l'acide silicique est libéré des ions métalliques par échange ionique, de préférence sur des résines échangeuses contenant des ions d'ammonium.

8.  Procédé selon l'une quelconque des revendications précédentes, caractérisé en ce qu'on hydrolyse à 20°C jusqu'à 98°C, de préférence à 85°C jusqu'à 98°C.

9.  Procédé selon l'une quelconque des revendications précédentes, caractérisé en ce que l'acide est ajouté avant, pendant ou seulement après l'hydrolyse et avant le traitement hydrothermique.

10. Procédé selon l'une quelconque des revendications 1 à 8, caractérisé en ce que l'acide est ajouté après l'hydrolyse et avant ou pendant le traitement hydrothermique.

11. Procédé selon l'une quelconque des revendications précédentes, caractérisé en ce que le vieillissement hydrothermique est réalisé pendant un laps de temps de 0,5 h à 24 h, de préférence de 2 h à 18 h.

12. Procédé selon l'une quelconque des revendications précédentes, caractérisé en ce que le vieillissement hydrothermique est réalisé à 80°C jusqu'à 130°C.

13. Procédé selon l'une quelconque des revendications précédentes, caractérisé en ce que le produit de la transformation est calciné à des températures entre 550°C et 1500°C pendant 0,5 à 24 h.

14. Silicates d'aluminium dispersés dans des milieux aqueux ou aqueux/alcooliques, caractérisés en ce que les silicates d'aluminium peuvent être préparés selon l'un quelconque des procédés des revendications 1 à 13 et qu'ils sont ensuite dispersibles à l'état séché, essentiellement exempt d'eau dans le milieu aqueux ou aqueux/alcoolique.

15. Utilisation des silicates d'aluminium selon la revendication 14, comme catalyseurs, comme supports de catalyseur, pour la préparation de catalyseurs, comme matériau de départ pour des matières premières céramiques, comme matériau de revêtement, comme composant liant et/ou comme modificateurs rhéologiques dans des systèmes aqueux.